# EUROPEAN PATENT SPECIFICATION

(11) **EP 1 751 487 B1**
(45) Date of publication and mention of the grant of the patent: **29.02.2012**
(21) Application number: 05752455.5
(22) Date of filing: 17.05.2005
(51) Int. Cl.: F28B 9/06

(54) **COOLING METHOD FOR NATURAL GAS CONVERSION COMPLEX**
KÜHLVERFAHREN FÜR ERDGASUMWANDLUNGSKOMPLEX
MÉTHODE DE REFROIDISSEMENT POUR UN COMPLEXE DE CONVERSION DE GAZ NATUREL

(30) Priority: 20.05.2004 US 573551 P; 20.05.2004 ZA 200403895; 23.02.2005 US 655403 P; 23.02.2005 ZA 200501588
(43) Date of publication of application: 14.02.2007
(73) Proprietor: The Petroleum Oil and Gas Corporation of South Africa (Pty) Ltd., 7500 Parow (ZA)
(72) Inventor: CLUR, Desmond Johann, 6500 MOSSEL BAY (ZA); SHAW, Gareth David Huntley, 7130 Somerset West (ZA)
(74) Representative: Samson & Partner
(86) International application number: PCT/ZA2005/000070
(87) International publication number: WO 2005/114082

(56) References cited:
- DE-A1- 3 414 659
- US-A- 5 714 657
- US-A1- 2002 170 228
- PATENT ABSTRACTS OF JAPAN vol. 2002, no. 12, 12 December 2002 (2002-12-12) -& JP 2002 221395 A (EBARA CORP), 9 August 2002 (2002-08-09)
- PATENT ABSTRACTS OF JAPAN vol. 2000, no. 25, 12 April 2001 (2001-04-12) -& JP 2001 228288 A (TOSHIBA CORP), 24 August 2001 (2001-08-24)
- PATENT ABSTRACTS OF JAPAN vol. 1997, no. 04, 30 April 1997 (1997-04-30) -& JP 08 338204 A (MITSUBISHI HEAVY IND LTD), 24 December 1996 (1996-12-24)
- PATENT ABSTRACTS OF JAPAN vol. 1998, no. 08, 30 June 1998 (1998-06-30) -& JP 10 061411 A (TOSHIBA CORP), 3 March 1998 (1998-03-03)

## Description

### Technical field of the invention

This invention relates to a cooling method and plant for a natural gas conversion complex.

### Background to the invention

A typical natural gas conversion complex such as a Gas to Liquids (GTL) production complex of 220 tons per hour (t/h) has a total cooling water demand of about 2400 MW. Cooling water is needed primarily for condensation of steam in the condensers of steam turbines in the Air Separation Units (ASU) and power generating units. Further cooling water is needed for heat exchangers in the GTL process units. It is known that the cooling water demand for the ASU and power generating units can be satisfied by a once-through seawater cooling system. It is further known that the demand for heat exchangers in the process units can be met with a fresh water cooling system. For a typical GTL production complex the seawater cooling system would have a circulation flow of about 123 000 t/h with a temperature difference of 15°C of the seawater between intake and discharge of the seawater. The fresh water cooling system would typically need a circulation flow of about 14 300 t/h with a temperature difference of 14°C between the cold water supply and hot water return to a cooling tower. Losses of water from the system are compensated for by supplying wastewater after treatment in a wastewater treatment plant to the cooling tower. It will be appreciated that the return of heated sea water to the sea heats the sea with negative environmental impact. It is an object of this invention to provide a cost effective cooling method and plant, which has an improved environmental impact.

### General description of the invention

According to a first aspect of the invention there is provided a cooling method for a natural gas conversion complex, which method includes the steps of:
circulating sea water in a first, open, cooling circuit;
contacting the sea water with a heat exchange of the natural gas conversation complex to absorb heat;
cooling the sea water from the outflow of the heat exchanger;
circulating fresh water in a second, closed, cooling circuit of the natural gas conversation complex
contacting the fresh water with the heat exchanger to lose heat; and
condensing steam in condensers of steam turbines in air separation units and power generating units of the natural gas conversion complex with the cooled sea water.

The method may further include the step of supplementing the sea water from a sea water intake unit.

The method may also include returning cooled sea water to the sea as blowdown.

According to a further aspect of the invention, there is provided a natural gas conversion complex, which includes:
a first, open, sea water cooling circuit;
a heat exchanger for heating the sea water;
a cooling means for cooling the sea water from the outflow of the heat exchanger;
steam condensers of steam turbines in air separation units and power generation units, the steam condensers being located in the sea water cooling circuit after the cooling means; and
a second, closed, fresh water cooling circuit in contact with the heat exchanger for exchanging heat with the cooled sea water.

The cooling means may be selected from a natural draft (hyperbolic) tower, forced draft cooling tower, counter flow induced tower, cross flow induced draft tower or variations thereof, depending on the cooling water demand of the natural gas conversion complex.

The cooling plant may include a blowdown means for returning cooled sea water to the sea.

The natural gas conversion complex may be a Catalytic Conversion of Olefins to Distillates (COD), Gas to Liquids (GTL), Fisher-Tropsch (FT) or methanol production complex or mixtures thereof.

### Detailed description of the invention

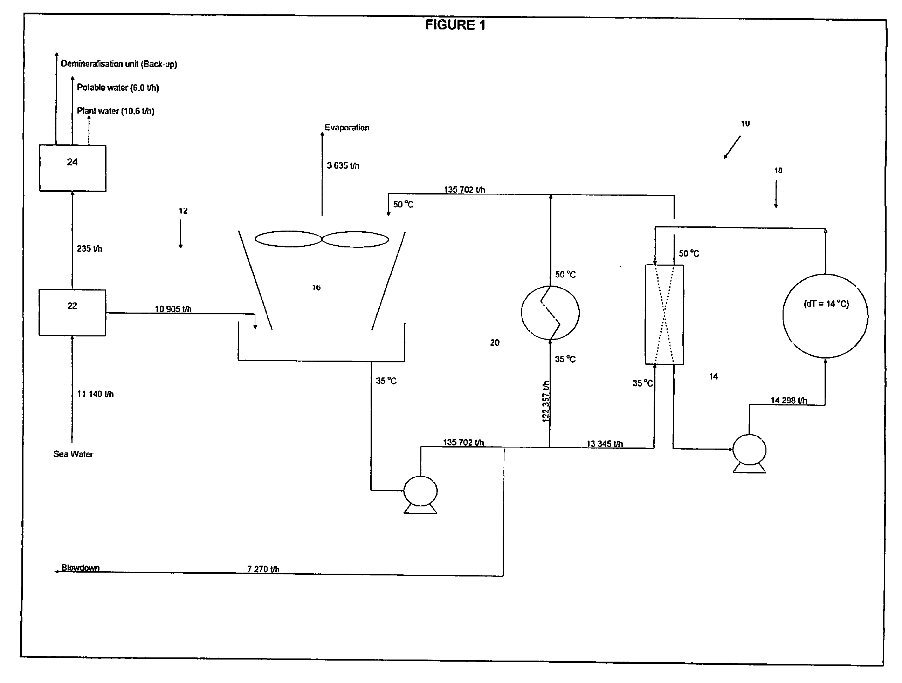

The invention is now described by way of a typical example of a 220 t/h GTL production complex with reference to the accompanying diagrammatic drawing, Figure 1. Figure 1 shows a flow diagram of a cooling method and plant for a natural gas conversion complex, in accordance with the invention.

Referring now to Figure 1, the cooling plant for a natural gas conversion complex, in accordance with the invention is generally indicated by reference numeral 10, includes a first, open, sea water cooling circuit 12, a plate heat exchanger 14 for heating the sea water and a cooling means, in the form of an evaporative cooling tower 16, for cooling the sea water from the outflow of the heat exchanger 14. The cooling plant also includes a second, closed, fresh water cooling circuit 18 in contact with the plate heat exchanger 14 for exchanging heat with the cooled sea water. The cooling circuit 12 also includes steam condensers 20 of steam turbines in the air separation and power generating units.

About 135702 t/h sea water is circulated in the first, open, cooling circuit 12. About 122357 t/h of the sea water is required primarily for condensation of steam in the condensers 20 of steam turbines in the air separation and power generating units. About 13345 t/h enters the plate heat exchangers 14 at 35°C and exiting at 50°C. The fresh (sweet) water cooling circuit 18 circulates at 14298 t/h providing a temperature absorbing capacity of 14°C (dT).

About 3635 t/h of the sea water evaporates in the cooling tower 16 and 7270 t/h of the cooled and concentrated 35°C sea water is returned to the sea (blowdown). The returned sea water solution is concentrated by a factor of about 1.5, the cycle of concentration.

The evaporated and returned sea water is supplemented by a sea water intake unit 22 with 10905 t/h seawater. About 235 t/h of sea water is routed to a sea water desalination plant 24 for production of desalinated water for use elsewhere in the complex 10.

It will be appreciated that:
- The required capacity and cost of the seawater intake unit will be reduced significantly, compared to a once through seawater system. The demand for seawater will reduce from the approximate prior art requirement of 122 357 t/h to about 11 140 t/h, a reduction of about 90 %;
- The prior art design of an evaporative cooling tower with treated FT wastewater as make-up source, requires that spare capacity and storage facilities be provided in a desalination unit to ensure sufficient make-up of fresh water to the tower to compensate for upsets in the wastewater treatment plant and/or the FT synthesis unit. This is no longer required for the cooling method and plant, in accordance with the invention, as prior art cooling tower (evaporative) systems will be replaced by a plate heat exchanger cooling system (closed system). This allows a typical design capacity of the desalination unit for a 220 t/h GTL production complex to be reduced to 100 t/h;
- It is estimated that the cooling water supply temperature from the seawater cooling tower, in accordance with the invention, can be reduced to 33 °C and lower depending on the environmental conditions. A temperature difference in excess of 15 °C is therefore possible, which will result in a reduction of the required condenser surface area and/or in the demand for cooling water;
- A reduction in cooling water supply temperature to the condensers of the power generating units will result in the condensers being operated at a lower vacuum, which in turn will result in increased power generation and available power;
- A temperature difference of more than 14 °C can be used in the design of the fresh water circuit due to the colder supply temperature of seawater to the heat exchangers. It will therefore be possible to reduce the investment cost required for heat exchangers,
- Environmental legislation, such as in the Persian Gulf, requires that the discharge of effluent streams into a receiving water body will not result in:
   - a temperature increase in excess of 3 °C at a radius of 100 m from the point of discharge, and
   - the Total Dissolved Solids concentration (TDS) of the receiving water body may not be increased by more than 10% at a radius of 200 m from the point of discharge.

With the cooling method and plant, in accordance with the invention, hot water will no longer be returned to the ocean, as the blowdown from the seawater cooling tower will be taken from the cold water supply to the plant. The TDS concentration of the blowdown water from the tower will be about 50% higher than that of seawater if the tower is operated at cycles of concentration = 1.5. However, this is not a problem due to the relatively low volumes compared to that returned to the ocean in terms of the prior art.

It shall be understood that the example is provided for illustrating the invention further and to assist a person skilled in the art with understanding the invention and are not meant to be construed as unduly limiting the reasonable scope of the invention, as defined by the claims.

## Claims

1. A natural gas conversion complex water cooling method, which method includes the steps of:
circulating sea water in a first, open, cooling circuit (12);
contacting the sea water with a heat exchanger (14) of the natural gas conversion complex (10) to absorb heat;
cooling the sea water from the outflow of the heat exchanger (14);
circulating fresh water in a second, closed, cooling circuit (18) of the natural gas conversion complex;
contacting the fresh water with the heat exchanger (14) to lose heat and
condensing steam in condensers (20) of steam turbines in air separation units and power generating units of the natural gas conversion complex with the cooled sea water.

2. A method as claimed in Claim 1, which includes the step of supplementing the sea water from a sea water intake unit.

3. A method as claimed in any one of the previous claims, which method includes the step of returning cooled sea water to the sea.

4. A natural gas conversion complex (10), which includes:
a first, open, sea water cooling circuit (12);
a heat exchanger (14) for heating the sea water;
a cooling means (16) for cooling the sea water from the outflow of the heat exchanger (14);
steam condensers (20) of steam turbines in air separation units and power generating units, the steam condensers (20) being located in the sea water cooling circuit (12) after the cooling means (16); and
a second, closed, fresh water cooling circuit (18) in contact with the heat exchanger (14) for exchanging heat with the cooled sea water.

5. A complex as claimed in Claim 4, wherein the cooling means (16) is selected from a group comprising a natural draft (hyperbolic) tower, forced drat cooling tower, counter flow induced tower, cross flow induced draft tower or variations thereof.

## Patentansprüche

1. Wasserkühlmethode für eine Anlage zur Umwandlung von Erdgas, wobei die Methode folgende Schritte umfasst:
Zirkulieren des Meerwassers in einem ersten, offenen Kühlkreislauf (12);
Kontaktherstellung zwischen dem Meerwasser und einem Wärmetauscher (14) der Anlage zur Umwandlung von Erdgas (10) zwecks Wärmeabsorption;
Kühlung des Meerwassers aus dem Abfluss des Wärmetauschers (14);
Zirkulieren von Süßwasser in einem zweiten, geschlossenen Kühlkreislauf (18) der Anlage zur Umwandlung von Erdgas;
Dampfkondensierung mit dem gekühlten Meerwasser in Kondensatoren (20) von Dampfturbinen in Luftabscheidereinheiten und Energieerzeugungseinheiten der Anlage zur Umwandlung von Erdgas.

2. Methode gemäß Anspruch 1, umfassend den Schritt einer Ergänzung des Meerwassers aus einer Meerwasserzulaufeinheit.

3. Methode gemäß einem der vorhergehenden Ansprüche, umfassend den Schritt des Rückführens gekühlten Meerwassers ins Meer.

4. Anlage zur Umwandlung von Erdgas (10), umfassend:
einen ersten, offenen Meerwasserkühlkreislauf (12);
einen Wärmetauscher (14) zur Erwärmung des Meerwassers;
eine Kühleinrichtung (16) zur Kühlung des Meerwassers aus dem Abfluss des Wärmetauschers (14);
Dampfkondensatoren (20) von Dampfturbinen in Luftabscheidereinheiten und Energieerzeugungseinheiten, wobei sich die der Kühleinrichtung (16) nachgeschalteten Dampfkondensatoren im Meerwasserkühlkreislauf (12) befinden; und
einen zweiten, geschlossenen Süßwasserkühlkreislauf (18) in Kontakt mit dem Wärmetauscher (14) zum Austausch von Wärme mit dem gekühlten Meerwasser.

5. Anlage gemäß Anspruch 4, wobei die Kühleinrichtung (16) aus einer Gruppe ausgewählt ist, die einen Turm mit natürlichem (hyperbolischen) Luftzug, einen Kühlturm mit forciertem Luftzug, einen Turm mit induziertem Gegenstrom, einen Turm mit induziertem tangentialen Luftzug oder deren Varianten umfasst.

## Revendications

1. Méthode de refroidissement d'eau pour une installation de conversion de gaz naturel, ladite méthode comprenant les étapes consistant à:
faire circuler de l'eau de mer dans un premier circuit de refroidissement ouvert (12);
mettre en contact l'eau de mer avec un échangeur de chaleur (14) de l'installation de conversion de gaz naturel (10) pour absorber la chaleur;
refroidir l'eau de mer à partir de l'écoulement de sortie de l'échangeur de chaleur (14);
faire circuler de l'eau douce dans un second circuit de refroidissement fermé (18) de l'installation de conversion de gaz naturel;
mettre en contact l'eau douce avec l'échangeur de chaleur (14) pour une déperdition de chaleur
et
condenser la vapeur avec l'eau de mer refroidie dans des condenseurs (20) de turbines à vapeur dans des unités de séparation d'air et des unités de génération d'énergie de l'installation de conversion de gaz naturel.

2. Méthode selon la Revendication 1, comprenant l'étape consistant à supplémenter l'eau de mer à partir d'une unité de prise d'eau de mer.

3. Méthode selon l'une quelconque des revendications précédentes, laquelle méthode comprend l'étape consistant à retourner de l'eau de mer refroidie à la mer.

4. Installation de conversion de gaz naturel (10) comprenant:
un premier circuit de refroidissement d'eau de mer ouvert (12);
un échangeur de chaleur (14) pour le chauffage de l'eau de mer;
un moyen de refroidissement (16) pour le refroidissement de l'eau de mer à partir de l'écoulement de sortie;
des condenseurs de vapeur (20) de turbines à vapeur dans des unités de séparation d'air et des unités de génération d'énergie, lesdits condenseurs de vapeur (20) étant positionnés dans le circuit de refroidissement (12) d'eau de mer en aval du moyen de refroidissement (16); et
un second circuit de refroidissement d'eau douce, fermé (18) en contact avec l'échangeur de chaleur (14) pour échanger de la chaleur avec l'eau de mer refroidie.

5. Installation selon la Revendication 4, dans laquelle le moyen de refroidissement (16) est sélectionné dans le groupe comprenant une tour à tirage naturel (hyperbolique), une tour de refroidissement à tirage forcé, une tour à contre-courant induit, une tour à tirage transversal induit ou des variations de ces dernières.
